# EUROPÄISCHE PATENTANMELDUNG

(11) **EP 2 639 729 A2**
(43) Veröffentlichungstag der Anmeldung: **18.09.2013**
(21) Anmeldenummer: 13001194.3
(22) Anmeldetag: 10.03.2013
(51) Int. Cl.: G06F 21/30, G06F 21/31, G06F 21/44

(54) **Automatisches Zugriffsteuersystem zum Steuern des Zugriffs auf ein physikalisches Objekt oder des Zugangs zu einem physikalischen Objekt und Verfahren**

(30) Priorität: 15.03.2012 DE 102012204064
(71) Anmelder: Langen, Manfred, 81827 München (DE)
(72) Erfinder: Langen, Manfred, 81827 München (DE)

(57) **Zusammenfassung**

Die vorliegende Erfindung offenbart ein automatisches Zugriffsteuersystem zum Steuern des Zugriffs auf ein physikalisches Objekt oder des Zugangs zu einem physikalischen Objekt mit einer Identifikationseinrichtung, welche dazu ausgebildet ist, eine Person und/oder ein Gerät zu identifizieren und mit einer Freigabeeinrichtung, welche dazu ausgebildet ist, der identifizierten Person und/oder dem identifizierten Gerät Zugriff auf das physikalische Objekt oder Zugang zu dem physikalischen Objekt zu gewähren, wenn eine automatisch berechnete Distanzmetrik der identifizierten Person und/oder des identifizierten Geräts zu dem physikalischen Objekt kleiner ist, als ein vorgegebener Schwellwert für die Distanzmetrik. Ferner offenbart die vorliegende Erfindung ein entsprechendes Verfahren.

## Beschreibung

### GEBIET DER ERFINDUNG

Die vorliegende Erfindung bezieht sich auf ein automatisches Zugriffsteuersystem zum Steuern des Zugriffs auf ein physikalisches Objekt oder des Zugangs zu einem physikalischen Objekt. Ferner bezieht sich die vorliegende Erfindung auf ein entsprechendes Verfahren.

### TECHNISCHER HINTERGRUND

Zugriffsteuersysteme dienen der Überwachung des Zugriffs auf oder des Zugangs zu bestimmten Objekten. Ein Zugriffsteuersystem wird dabei eingesetzt, um zu entscheiden, ob z.B. einer Person Zugriff auf ein bestimmtes Objekt gewährt wird.

Zugriffsteuersysteme können dabei sowohl zum Steuern des Zugriffs auf physikalische Objekte als auch auf virtuelle Objekte, z.B. Daten, eingesetzt werden.

In üblichen Zugriffsteuersystemen werden Personen oder im Besitz der jeweiligen Person befindliche Schlüsselobjekte direkt oder indirekt identifiziert und eine Berechtigung der jeweiligen Person zum Zugriff auf das Objekt bestimmt. Um diese Berechtigung zu bestimmen, werden Berechtigungsdaten für jede Person festgelegt, welche das Zugriffsteuersystem benutzt. Die Berechtigungsdaten zeigen für jede der Personen an, ob eine Person auf das jeweilige Objekt zugreifen darf oder nicht.

Die Berechtigungsdaten können dabei weitere Informationen aufweisen. So kann z.B. eine Berechtigung zum Zugriff auf ein Objekt für eine Person abhängig von der Tageszeit oder dem Wochentag sein. Z.B. kann einem Mitarbeiter der Zugang zu einem Entwicklungslabor lediglich an Arbeitstagen zwischen 7:00 und 19:00 gewährt werden.

Ferner können die Berechtigungsdaten z.B. Informationen über die Art der Berechtigung für eine Person aufweisen. In einer Bibliothek kann z.B. eine Person das Recht zum Betreten des Lesesaals haben, aber kein Recht, Bücher auszuleihen. Ebenso kann ein Lagerarbeiter das Recht haben, das Lager zum Zwecke seiner Arbeit zu betreten, aber lediglich der Transportfahrer hat das Recht, Objekte aus dem Lager zu entfernen.

Um ein herkömmliches Zugriffsteuersystem einsetzen zu können, ist es notwendig, die Berechtigung zum Zugriff auf ein Objekt für jeden Benutzer einzeln oder zumindest für eine Gruppe von Benutzern vor dem Zugriff eines Benutzers auf das Objekt festzulegen und diese Information dem Zugriffsteuersystem bereitzustellen.

Dies führt dazu, dass ein Zugriffssteuersystem nur mit hohem Aufwand an eine sich ändernde Menge von Benutzern angepasst werden kann.

### ZUSAMMENFASSUNG DER ERFINDUNG

Es ist daher eine Aufgabe der vorliegenden Erfindung ein flexibles Zugriffsteuersystem bereitzustellen.

Diese Aufgabe wird erfindungsgemäß durch die Merkmale der unabhängigen Ansprüche gelöst.

Demgemäß ist vorgesehen:
Ein Automatisches Zugriffsteuersystem zum Steuern des Zugriffs auf ein physikalisches Objekt oder des Zugangs zu einem physikalischen Objekt mit einer Identifikationseinrichtung, welche dazu ausgebildet ist, eine Person und/oder ein Gerät zu identifizieren, und mit einer Freigabeeinrichtung, welche dazu ausgebildet ist, der identifizierten Person und/oder dem identifizierten Gerät Zugriff auf das physikalische Objekt oder Zugang zu dem physikalischen Objekt zu gewähren, wenn eine automatisch berechnete Distanzmetrik der identifizierten Person und/oder des identifizierten Geräts zu dem physikalischen Objekt kleiner ist, als ein vorgegebener Schwellwert für die Distanzmetrik.

Ferner ist vorgesehen:
Ein Verfahren zur Zugriffsteuerung auf ein physikalisches Objekt mit den Schritten Identifizieren einer Person und/oder eines Geräts und Freigeben des Zugriffs auf das physikalische Objekt oder des Zugangs zu dem physikalischen Objekt für die identifizierte Person und/oder das identifizierte Gerät, wenn eine Distanzmetrik der identifizierten Person und/oder des identifizierten Geräts zu dem physikalischen Objekt kleiner ist, als ein vorgegebener Schwellwert für die Distanzmetrik.

Die der vorliegenden Erfindung zu Grunde liegende Erkenntnis besteht darin, dass eine Zugriffsteuerung oder auch eine Zugangssteuerung heute üblicherweise statisch konfiguriert werden müssen und diese statische Konfiguration zu einem hohen Aufwand bei der Handhabung des Zugriffsteuersystems führt. Insbesondere führt dies dazu, dass bei Änderungen der Benutzer, z.B. dem Hinzukommen eines neuen Benutzers, manuell eine Anpassung des Zugriffsteuersystems vorgenommen werden muss.

Die der vorliegenden Erfindung zu Grunde liegende Idee besteht nun darin, dieser Erkenntnis Rechnung zu tragen und ein Zugriffsteuersystem vorzusehen, bei welchem die Steuerung des Zugriffs oder des Zugangs für Benutzer nicht basierend auf einer statischen Konfiguration des Zugriffsteuersystems erfolgt.

Die vorliegende Erfindung sieht vor, einen Zugriff auf ein physikalische Objekt bzw. einen Zugang zu dem physikalischen Objekt basierend auf einer dynamischen, veränderbaren Distanzmetrik automatisch zu steuern.

Dabei basiert die vorliegende Erfindung auf der Annahme, dass potentielle Benutzer eines Zugriffsteuersystems aktiv oder passiv eine Vielzahl von Informationen veröffentlichen, welche es ermöglichen, eine Distanzmetrik zwischen den jeweiligen Benutzern und einer für das betroffene physikalische Objekt aufgestellten Beschreibung zu bestimmen.

Wird eine solche Distanzmetrik zwischen dem entsprechenden physikalischen Objekt und einem Benutzer bestimmt, kann auf Basis eines vorgegebenen Schwellwertes für die jeweilige Distanzmetrik sehr einfach gesteuert werden, ob der Benutzer Zugang zu dem physikalischen Objekt oder Zugriff auf das physikalische Objekt erhält. Z.B. kann vorgesehen sein, dass ein Benutzer Zutritt zu einem Gebäude erhält, wenn die Distanzmetrik, welche zwischen dem Benutzer und dem Gebäude bestimmt wurde, den vorgegebenen Schwellwert unterschreitet.

Dabei bedeutet ein Wert der Distanzmetrik von 0 die größte "Nähe". In einer Ausführungsform kann die Distanzmetrik auch auf einen Wert von 1 normiert werden, welcher dann die größte "Nähe" bedeutet.

Die vorliegende Erfindung ist dabei nicht auf Personen beschränkt sondern kann auch den Zugriff eines Geräts auf ein physikalisches Objekt steuern.

Vorteilhafte Ausführungsformen und Weiterbildungen ergeben sich aus den Unteransprüchen sowie aus der Beschreibung unter Bezugnahme auf die Figuren.

In einer Ausführungsform ist eine Recheneinrichtung vorgesehen, welche dazu ausgebildet ist, die Distanzmetrik der identifizierten Person und/oder des identifizierten Geräts zu dem physikalischen Objekt automatisch zu berechnen. Dies ermöglicht eine sehr einfache Steuerung des Zugriffs auf ein physikalisches Objekt oder des Zugangs zu einem physikalischen Objekt. Insbesondere kann so eine Zugriffsteuerung basierend auf aktuellen Daten automatisch ohne Zutun z.B. eines Administrators erfolgen.

In einer Ausführungsform ist die Recheneinrichtung dazu ausgebildet, die Distanzmetrik zumindest basierend auf potentiellen Beziehungen der identifizierten Person und/oder des identifizierten Geräts zu dem physikalischen Objekt, welche aus semantischen Maßzahlen, welche sich auf die identifizierte Person und/oder das identifizierte Gerät beziehen, und/oder auf Interaktionen der identifizierten Person und/oder des identifizierten Geräts mit dem physikalischen Objekt, und/oder basierend auf expliziten Beziehungen der identifizierten Person und/oder des identifizierten Geräts zu dem physikalischen Objekt automatisch zu berechnen.

Dabei können semantische Maßzahlen sich z.B. auf Informationen bzw. Begriffe oder Themen beziehen, zu welchen die identifizierte Person selbst Veröffentlichungen getätigt hat. Dies können z.B. Beiträge in einem Forum, Blog-Einträge oder Artikel sein, welche die identifizierte Person verfasst hat. Eine semantische Maßzahl kann z.B. basierend auf Begriffen oder Tags, welche aus den Veröffentlichungen der identifizierten Person extrahiert wurden, und aus Tags bzw. Begriffen zu dem physikalischen Objekt gebildet werden.

Beispielsweise kann der Hamming-Abstand als semantische Maßzahl genutzt werden. Weitere Möglichkeiten sind möglich.

Ferner können Interaktionen der identifizierten Person und/oder des identifizierten Geräts mit dem physikalischen Objekt z.B. Interaktionen der identifizierten Person und/oder des identifizierten Geräts mit einer Beschreibung des physikalischen Objekts bzw. mit über das physikalische Objekt veröffentlichten Informationen oder dergleichen sein. Beispielsweise kann eine identifizierte Person einen Bericht über ein physikalisches Objekt verfassen oder einen Bericht über ein physikalisches Objekt kommentieren.

Schließlich können explizite Beziehungen der identifizierten Person und/oder des identifizierten Geräts zu dem physikalischen Objekt z.B. Statusinformationen in einem sozialen Netzwerk, wie z.B. ein "Freund"-Status oder dergleichen sein.

In einer Ausführungsform ist die Recheneinrichtung als Server ausgebildet und der Server ist mit der Freigabeeinrichtung über ein privates und/oder öffentliches Datennetzwerk gekoppelt. Dies ermöglicht es, ein dezentrales Zugriffsteuersystem bereitzustellen, bei welchem eine Recheneinrichtung mit einer Vielzahl von Freigabeeinrichtungen gekoppelt sein kann.

In einer Ausführungsform ist die Freigabeeinrichtung dazu ausgebildet, die Distanzmetrik der identifizierten Person und/oder des identifizierten Geräts zu dem physikalischen Objekt über ein Protokoll zur Interprozesskommunikation, insbesondere RPC, und/oder über eine Anwendungsschnittstelle, insbesondere eine REST Anwendungsschnittstelle und/oder eine SOAP Anwendungsschnittstelle von der Recheneinrichtung abzurufen. Dies ermöglicht es, eine standardisierte Schnittstelle einzusetzen. Dadurch kann auch weiteren Systemen und Anwendungen der Zugriff auf die Distanzmetrik ermöglich werden.

In einer Ausführungsform ist die Identifikationseinrichtung als eine optische Identifikationseinrichtung und/oder eine kontaktbehaftete elektronische Identifikationseinrichtung und/oder eine kontaktlose elektronische Identifikationseinrichtung und/oder eine biometrische Identifikationseinrichtung ausgebildet. Dies ermöglicht es, die Identifikationseinrichtung sehr flexibel an unterschiedliche Anforderungen und Anwendungen anzupassen.

In einer Ausführungsform ist das physikalische Objekt als ein WLAN-Router ausgebildet, und die Freigabeeinrichtung ist dazu ausgebildet, einem identifizierten WLAN-Gerät Zugriff auf den WLAN-Router zu gewähren. Dies ermöglicht es z.B. einen öffentlichen WLAN-Zugangspunkt bereitzustellen, ohne, dass jeder Benutzer sich explizit registrieren muss, um den WLAN-Zugangspunkt zu nutzen.

In einer Ausführungsform weist das physikalische Objekt ein elektronisches Türschloss auf, und die Freigabeeinrichtung ist dazu ausgebildet, einer identifizierten Person Zugriff auf das durch das elektronische Türschloss geschützte physikalische Objekt oder Zugang zu dem durch das elektronische Türschloss geschützten physikalische Objekt zu gewähren. Dies ermöglicht eine sehr flexible Steuerung des Zugriffs oder des Zugangs zu dem physikalischen Objekt.

In einer Ausführungsform ist das physikalische Objekt als eine Sicherheitsschleuse ausgebildet, und die Freigabeeinrichtung ist dazu ausgebildet, einer identifizierten Person Zugang zu mindestens einem durch die Sicherheitsschleuse geschützten Bereich zu gewähren. Die Sicherheitsschleuse kann dabei unterschiedliche Sicherheitsniveaus vorsehen und das Zugriffsteuersystem kann jedem Benutzer eines der Sicherheitsniveaus zuweisen. Jedes der Sicherheitsniveaus sieht dabei unterschiedliche Sicherheitsuntersuchungen vor. Dies ermöglicht es, die Sicherheit für das physikalische Objekt, z.B. einen Flughafen, zu erhöhen und dabei aber gleichzeitig als potentiell ungefährlich eingestuften Benutzern die Wartezeit an der Sicherheitsschleuse zu verkürzen.

In einer Ausführungsform ist das physikalische Objekt als ein Ort mit einer Vielzahl von Bereichen ausgebildet, und die Freigabeeinrichtung ist dazu ausgebildet, einer identifizierten Person und/oder einem identifizierten Gerät einen Hinweis auf zumindest einen der Bereiche auszugeben. Dadurch wird es möglich, einen Benutzer z.B. in einem Wartebereich eines Flughafens oder Bahnhofs einen Bereich anzuzeigen, in welchem sich Personen mit gleichen oder ähnlichen Interessen befinden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform eines erfindungsgemäßen automatischen Zugriffsteuersystems 1;
- Fig. 2: ein Ablaufdiagramm einer Ausführungsform eines erfindungsgemäßen Verfahrens;
- Fig. 3: ein weiteres Blockschaltbild einer Ausführungsform eines erfindungsgemäßen automatischen Zugriffsteuersystems 1;
- Fig. 4: ein Diagramm zur Veranschaulichung der Distanzmetrik 6.

In allen Figuren sind gleiche bzw. funktionsgleiche Elemente und Vorrichtungen - sofern nichts Anderes angegeben ist - mit denselben Bezugszeichen versehen worden.

### BESCHREIBUNG VON AUSFÜHRUNGSBEISPIELEN

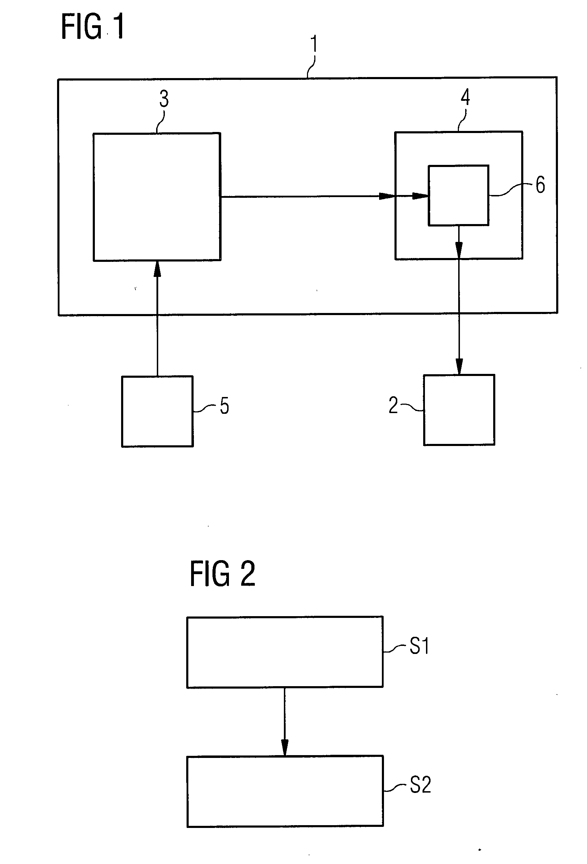

Fig. 1 zeigt ein Blockschaltbild einer Ausführungsform eines erfindungsgemäßen automatischen Zugriffsteuersystems 1.

Das automatische Zugriffsteuersystem 1 weist eine Identifikationseinrichtung 3 auf, die dazu ausgebildet ist, eine Person 5 zu identifizieren. Die Identifikationseinrichtung 3 ist mit einer Freigabeeinrichtung 4 gekoppelt, welche dazu ausgebildet ist, der identifizierten Person 5 basierend auf einer automatisch berechneten Distanzmetrik 6 Zugriff auf ein physikalisches Objekt 2 zu gewähren. Dazu vergleicht die Freigabeeinrichtung 4 die automatisch berechnete Distanzmetrik 6 mit einem vorgegebenen Schwellwert für die Distanzmetrik 6. Ist die automatisch berechnete Distanzmetrik 6 kleiner als der vorgegebenen Schwellwert, wird der Zugriff auf das Objekt 2 von der Freigabeeinrichtung 4 freigegeben.

Das automatische Zugriffsteuersystem 1 in Fig. 1 ist ein automatisches Zugriffsteuersystem 1 zur Steuerung des Zugangs zu einem Raum 2. Dazu ist die Identifikationseinrichtung 3 als RFID-Lesegerät 3 ausgebildet, welche Personen 5 anhand eines RFID-Tags identifiziert, welches diese z.B. in Form eines Ausweises, bei sich tragen können. Wird eine Person 5 Identifiziert, werden Informationen über die identifizierte Person 5 von der Identifikationseinrichtung 3 an die Freigabeeinrichtung 4 übermittelt. Die Freigabeeinrichtung 4 ist als Türsteuereinrichtung 4 ausgebildet, welche dazu ausgebildet ist, eine Türe zu öffnen und zu schließen. Die Türsteuereinrichtung 4 ist ferner dazu ausgebildet, basierend auf den Informationen über die identifizierte Person 5 und einer automatisch berechneten Distanzmetrik 6 der identifizierten Person 5 den Zutritt zu dem durch die Türe geschützten Raum 2 zu gewähren oder nicht. Der durch die Türe geschützte Raum 2 kann z.B. ein Konferenzsaal 2 sein.

Um eine Distanzmetrik 6 automatisch berechnen zu können, wird zumindest eine Beschreibung der Konferenz, welche in dem Konferenzsaal 2 stattfindet, bereitgestellt. Ferner werden Veröffentlichungen, welche die identifizierte Person 5 publiziert hat auf ihre semantische Ähnlichkeit zu der Beschreibung der Konferenz hin untersucht. Die Ähnlichkeit der entsprechenden Veröffentlichungen zu der Beschreibung der Konferenz kann als semantische Maßzahl ausgedrückt werden. Dazu können z.B. für Begriffe aus der Beschreibung der Konferenz und aus den Veröffentlichungen der identifizierten Person 5 die Cosinus-Distanzen von Term-Vektoren berechnet werden.

In einer Ausführungsform wird diese semantische Maßzahl als Distanzmetrik 6 zur Steuerung des Zugangs der entsprechenden identifizierten Person 5 zu dem Konferenzsaal 2 genutzt.

In weiteren Ausführungsformen werden weitere Kennzahlen in die Berechnung der Distanzmetrik 6 einbezogen.

Beispielsweise kann ein Status der identifizierten Person, welchen die identifizierte Person in einem sozialen Netzwerk, z.B. Facebook, Google+ oder dergleichen, in Bezug auf die Konferenz angegeben hat, in die Berechnung der Distanzmetrik einfließen. Beispielsweise kann eine Person ein "Freund", ein "Folgender" ("Follower") oder dergleichen der Konferenz sein. Dabei kann jedem dieser Stati eine Gewichtung zugeordnet werden. Z.B. kann ein Freund-Status eine Gewichtung von 0,8 und ein Folgender-Status eine Gewichtung von 0,4 erhalten. Abweichende Gewichtungen können je nach Anwendung festgelegt werden.

Eine Distanzmetrik 6 kann dann z.B. aus einer linearen, insbesondere einer gewichteten, Verknüpfung der semantischen Maßzahl und der Gewichtung des Status der identifizierten Person 5 berechnet werden.

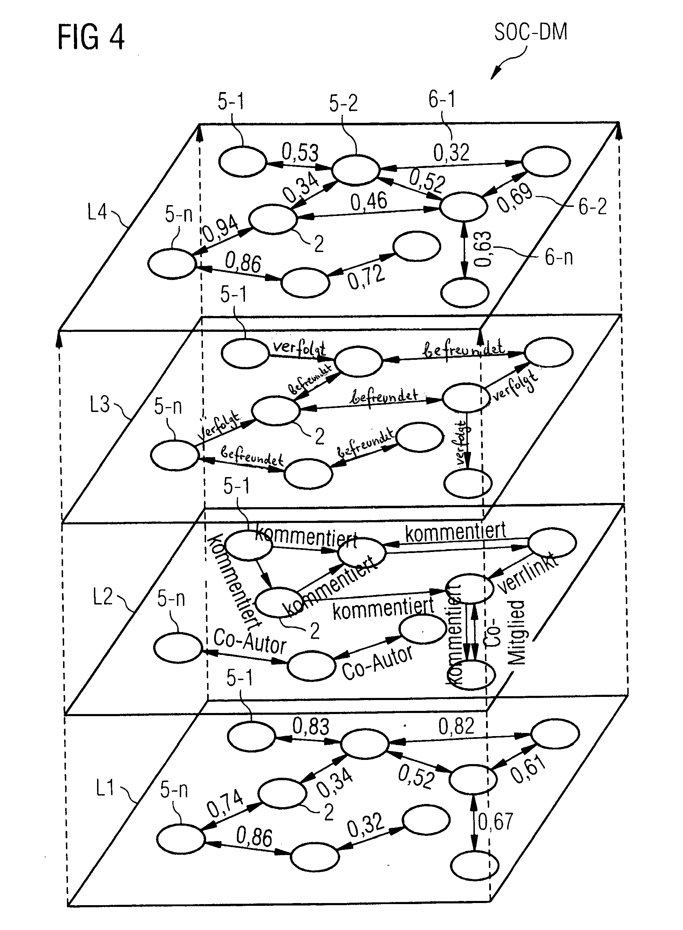

Weitere Möglichkeiten zur Bildung der Distanzmetrik 6 werden in Bezug auf Fig. 4 näher beschrieben.

Das automatische Zugriffsteuersystem 1 in Fig. 1 steuert den Zugang zu einem Konferenzsaal 2. In weiteren Ausführungsformen kann das Zugriffssteuersystem 1 auch den Zugang zu Wartebereichen 2, z.B. in Flughäfen oder Bahnhöfen, steuern.

In noch weiteren Ausführungsformen kann das Zugriffsteuersystem 1 aber auch den Zugang zu Servern 2, Internet-Seiten 2, Daten 2 und dergleichen Steuern. Dabei können unterschiedliche Identifikationsverfahren zur Identifikation der jeweiligen Benutzer 5 eingesetzt werden. Z.B. können eine Identifikation und ein Passwort genutzt werden, um einen Benutzer 5 zu identifizieren. Ferner können auch Smartcard-basierte Identifikationsverfahren oder dergleichen zum Einsatz kommen.

Das Zugriffsteuersystem 1 kann in solchen Ausführungsformen auch als allgemeines Zugriffsteuersystem 1 ausgebildet sein, welches nicht nur den Zugriff zu einem einzelnen Server 2 oder einer einzelnen Internet-Seite 2 steuert, sondern welches einen Dienst über ein Netzwerk anbietet, welcher von einer Vielzahl von Servern 2, Internet-Seiten 2 und dergleichen genutzt werden kann.

Das Zugriffsteuersystem 1 kann z.B. auch genutzt werden, um den Zugriff auf ein drahtloses Netzwerk 2, z.B. ein WLAN 2, zu steuern. In einer solchen Ausführungsform kann die Identifikationseinrichtung 3 in einem WLAN-Zugangspunkt 3 angeordnet sein. Dies ist insbesondere von Vorteil, da WLAN-Zugangspunkte 3 eine Identifikation von WLAN-Geräten 5 gemäß WLAN-Standard bereits implementieren. Die Freigabeeinrichtung 4 kann z.B. als Netzwerkserver 4 ausgebildet sein, welcher über ein lokales und/oder öffentliches Netzwerk mit dem WLAN-Zugangspunkt 3 gekoppelt ist.

In noch weiteren Ausführungsformen kann das Zugriffsteuersystem 1 z.B. auch den Zugang zu einem zeitlich geteilt genutzten physikalischen Objekt 2, wie z.B. einem Leihfahrrad 2 oder einem Car-Sharing Fahrzeug 2 steuern. Das Zugriffsteuersystem 1 könnte z.B. mit einem Türschloss eines Car-Sharing Fahrzeugs 2 gekoppelt sein und das Öffnen und Schließen des Türschlosses des Car-Sharing Fahrzeugs 2 steuern.

In solch einer Anwendung können bei der automatischen Berechnung der Distanzmetrik 6 andere Informationen genutzt werden, als bei der Zugangssteuerung einer Konferenz. Beispielsweise kann eine Maßzahl definiert werden, die eine Aussage darüber zulässt, wie viele bereits vorhandene Benutzer des Car-Sharing Fahrzeugs ein neuer identifizierter Benutzer 5 kennt, welcher Zugang zu dem Car-Sharing Fahrzeug erhalten möchte. Ferner kann in die automatische Berechnung der Distanzmetrik 6 auch eine Information über die Bonität des identifizierten Benutzers 5, z.B. eine Schufa-Auskunft, eine Information über das Verhalten des identifizierten Benutzers 5 gegenüber weiteren Anbietern von Leih- und/oder Mietobjekten und dergleichen einbezogen werden. Beispielsweise kann eine Datenbank mit Informationen über das Verhalten von Benutzern 5 mit Leih-DVDs, Leih-CDs, Leih-Büchern und dergleichen aufgebaut werden. Hat ein Benutzer beispielsweise Leih-Bücher in schlechtem Zustand oder nicht rechtzeitig zurückgebracht, kann dies zu einem hohen Wert der Distanzmetrik bei zukünftigen Abfragen führen.

Fig. 2 zeigt ein Ablaufdiagramm einer Ausführungsform eines erfindungsgemäßen Verfahrens.

In einem ersten Schritt S1 wird eine Person 5 und/oder ein Gerät 5 identifiziert. Eine Person kann z.B. auch anhand eines Geräts, z.B. einer Smartcard, in Kombination mit einem weiteren Merkmal, z.B. einer PIN, identifiziert werden.

In einem weiteren Schritt S2 wird der Zugriff auf das physikalische Objekt 2 oder der Zugang zu dem physikalischen Objekt 2 für die identifizierte Person 5 und/oder das identifizierte Gerät 5 freigegeben, wenn eine Distanzmetrik 6 der identifizierten Person 5 und/oder des identifizierten Geräts 5 zu dem physikalischen Objekt 2 kleiner ist, als ein vorgegebener Schwellwert für die Distanzmetrik 6.

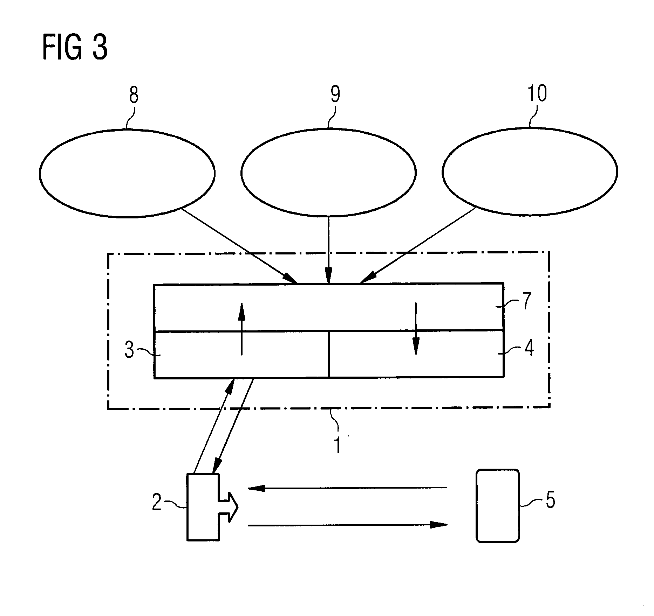

Fig. 3 zeigt ein weiteres Blockschaltbild einer Ausführungsform eines erfindungsgemäßen automatischen Zugriffsteuersystems 1.

Das Zugriffsteuersystem 1 in Fig. 3 unterscheidet sich von dem Zugriffsteuersystem 1 in Fig. 1 dahingehend, dass das physikalische Objekt 2, zu welchem der Zugang gesteuert wird, ein WLAN-Zugangspunkt 2 ist. Ferner weist das Zugriffsteuersystem 1 in Fig. 3 eine Recheneinrichtung 7 auf, welche dazu ausgebildet ist, zu einem identifizierten WLAN-Gerät 5 automatisch eine Distanzmetrik bzgl. des WLAN-Zugangspunktes 2 zu berechnen und diese der Freigabeeinrichtung 4 bereitzustellen.

Ferner sind in Fig. 3 drei Informationsquellen 8, 9 und 10 in Form von Ellipsen 8, 9 und 10 dargestellt, welche Informationen aus mindestens einem sozialen Netzwerk 8, Informationen zu Veröffentlichungen 9 einer Person, welche dem WLAN-Gerät 5 zugeordnet ist, und Informationen zu Interaktionen der Person, welche dem WLAN-Gerät 5 zugeordnet ist, mit z.B. einem Betreiber des WLAN-Zugangspunktes 2 aufweisen.

Die Informationsquellen 8, 9 und 10 können in weiteren Ausführungsformen z.B. jeweils ein bestimmtes soziales Netzwerk betreffen. Beispielsweise kann die Informationsquelle 8 öffentliche soziale Netzwerke betreffen. Die Informationsquelle 9 kann geschlossene soziale Netzwerke (z.B. ein Firmen-Intranet) betreffen. Schließlich kann die Informationsquelle 10 temporäre soziale Netzwerke (z.B. Konferenzen) betreffen. Weitere Ausgestaltungen der Informationsquellen sind ebenfalls möglich.

Fig. 4 zeigt ein Diagramm zur Veranschaulichung der Distanzmetrik 6.

In Fig. 4 wird ein mehrschichtiges Netzwerk 11 von Beziehungen gezeigt. Das mehrschichtige Netzwerk 11 in Fig. 4 weist vier Schichten L1 - L4 auf. Jede der Schichten weist dabei Informationen über eine Vielzahl von Benutzern 5-1 - 5-n oder Geräten 5-1 - 5-n, welche das Zugriffsteuersystem 1 nutzen können, auf. Jede Schicht bezieht sich dabei auf eine andere Art von Beziehung zwischen den Benutzern 5-1 - 5-n oder Geräten 5-1 - 5-n und dem durch das Zugriffsteuersystem 1 geschützte physikalische Objekt 2.

Die Schicht L1 weist semantischen Maßzahlen auf, welche Beziehungen zwischen einzelnen Benutzern 5-1 - 5-n oder Geräten 5-1 - 5-n untereinander und in Bezug auf das physikalische Objekt 2 kennzeichnen. Dies ermöglicht es eine semantische Maßzahl auch für diejenigen Benutzer 5-1 - 5-n oder Geräte 5-1 - 5-n zu berechnen, die keine direkte Verbindung zu dem physikalischen Objekt 2 aufweisen. Z.B. können die semantischen Maßzahlen der Verbindungen zwischen einem Benutzer 5-1 - 5-n oder Geräte 5-1 - 5-n, welche zwischen diesem Benutzer 5-1 - 5-n oder Gerät 5-1 - 5-n und dem physikalischen Objekt 2 liegen, aufsummiert werden.

Die zweite Schicht L2 weist Informationen auf, welche aus Interaktionen zwischen einzelnen Benutzern 5-1 - 5-n oder Geräten 5-1 - 5-n untereinander und in Bezug auf das physikalische Objekt 2 abgeleitet werden. Beispielsweise kann ein Benutzer 5-1 - 5-n einen Kommentar zu einer Konferenz abgeben oder ein Benutzer 5-1 - 5-n kann Co-Autor eines Berichts über die Konferenz sein. Jeder dieser Interaktionen kann ein bestimmtes Gewicht zugeordnet werden. So können anstatt der Begriffe wie z.B. "Co-Autor", "kommentiert" und dergleichen Maßzahlen vergeben werden, mit welchen sehr einfach weitere Berechnungen möglich werden.

Die dritte Schicht L3 weist Informationen auf, welche aus Aktionen bzw. Zuständen, z.B. passiven und/oder einseitigen Aktionen, zwischen einzelnen Benutzern 5-1 - 5-n oder Geräten 5-1 - 5-n untereinander und in Bezug auf das physikalische Objekt 2 abgeleitet werden. Diese Aktionen und/oder Zustände können z.B. aus einem sozialen Netzwerk abgeleitet werden. Beispielsweise kann der Status zwischen einem Benutzer 5-1 - 5-n und einer Konferenz, welchen der Benutzer in einem sozialen Netzwerk angegeben hat, z.B. "Folgender" ("Follower") und dergleichen sein. Auch den einzelnen Stati können Maßzahlen zugeordnet werden. So können anstatt der Begriffe wie "Folgender", "Freund" und dergleichen Maßzahlen vergeben werden, mit welchen sehr einfach weitere Berechnungen möglich werden.

Die automatische Berechnung der Distanzmetrik 6 , welche in der vierten Schicht L4 dargestellt ist, kann auf unterschiedlichen Arten erfolgen. Insbesondere können aus ein und dem gleichen mehrsichtigen Netzwerk 11 eine Vielzahl von Distanzmetriken 6 berechnet werden.

Zur Berechnung der Distanzmetriken kann z.B. für jede Schicht L1 - L3 der ersten bis dritten Schichten L1 - L3 ein Gewicht in Form eines Faktors zwischen 0 und 1 festgelegt werden. Die Distanzmetrik 6 kann dann z.B. als Summe der gewichteten Maßzahlen der ersten bis dritten Schichten L1 - L3 berechnet werden.

Das Gewichten der einzelnen Maßzahlen der ersten bis dritten Schichten L1 - L3 ermöglicht es, für spezifische Fragestellungen spezifische Distanzmetriken zu definieren. Es wird beispielsweise möglich, den Einfluss einer Maßzahl zu eliminieren, indem für diese Maßzahl ein Faktor von 0 vorgegeben wird. Ferner wird es möglich die Distanzmetrik lediglich als eine der Maßzahlen zu definieren, indem die weiteren Maßzahlen mit einem Faktor von 0 gewichtet werden.

In einer weiteren Ausführungsform können die einzelnen Maßzahlen der ersten bis dritten Schichten L1 - L3 auch addiert und/oder subtrahiert werden. Fernern können die einzelnen Maßzahlen der ersten bis dritten Schichten L1 - L3 multipliziert oder dividiert werden. Weitere mathematische Berechnungen sind ebenfalls möglich.

In einer Ausführungsform wird die Distanzmetrik auf einen Maximalwert von 1 normiert.

In einem Ausführungsbeispiel kann z.B. der Zugang eines ersten Benutzers 5-1 - 5-n zu einem Forum in einem sozialen Netzwerk mittels der Distanzmetrik 6 gesteuert werden. Dazu können die Beziehungen des ersten Benutzers 5-1 - 5-n zu einem bereits in dem Forum zugelassenen zweiten Benutzer 5-n - 5-1 als Basis dienen. In diesem Beispiel wird jede Schicht L1 - L3 mit einem Faktor von 1 gewichtet. Die Distanzmetrik 6 ergibt sich aus der Summe der Maßzahlen der einzelnen Schichten L1 - L3 geteilt durch die Anzahl der Maßzahlen, also 3.

Hat die semantische Maßzahl der ersten Schicht L1 einen Wert von 0,83 und die Maßzahl der zweiten Schicht L2 einen Wert von 0,4 und die Maßzahl der dritten Schicht L3 einen Wert von 0, so ergibt sich die Distanzmetrik 6 zu (0,83+0,4+0)/3 = 0,41.

Ist in diesem Fall der Schwellwert auf einen Wert größer 0,41 festgelegt, erhält der erste Benutzer 5-1 - 5-n Zugriff auf das Forum. Ist der Schwellwert auf einen Wert kleiner 0,41 festgelegt, erhält der erste Benutzer 5-1 - 5-n keinen Zugriff auf das Forum.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Automatisches Zugriffsteuersystem (1) zum Steuern des Zugriffs auf ein physikalisches Objekt (2) oder des Zugangs zu einem physikalischen Objekt (2) mit
einer Identifikationseinrichtung (3), welche dazu ausgebildet ist, eine Person (5) und/oder ein Gerät (5) zu identifizieren;
einer Freigabeeinrichtung (4), welche dazu ausgebildet ist, der identifizierten Person (5) und/oder dem identifizierten Gerät (5) Zugriff auf das physikalische Objekt (2) oder Zugang zu dem physikalischen Objekt (2) zu gewähren, wenn eine automatisch berechnete Distanzmetrik (6) der identifizierten Person (5) und/oder des identifizierten Geräts (5) zu dem physikalischen Objekt (2) kleiner ist, als ein vorgegebener Schwellwert für die Distanzmetrik (6).

2. Automatisches Zugriffsteuersystem nach Anspruch 1,
**dadurch gekennzeichnet,**
**dass** eine Recheneinrichtung (7) vorgesehen ist, welche dazu ausgebildet ist, die Distanzmetrik (6) der identifizierten Person (5) und/oder des identifizierten Geräts (5) zu dem physikalischen Objekt (2) automatisch zu berechnen.

3. Automatisches Zugriffsteuersystem nach Anspruch 2,
**dadurch gekennzeichnet,**
**dass** die Recheneinrichtung (7) dazu ausgebildet ist, die Distanzmetrik (6) zumindest basierend
auf potentiellen Beziehungen der identifizierten Person (5) und/oder des identifizierten Geräts (5) zu dem physikalischen Objekt (2), welche aus semantischen Maßzahlen, welche sich auf die identifizierte Person (5) und/oder das identifizierte Gerät (5) beziehen, und/oder
auf Interaktionen der identifizierten Person (5) und/oder des identifizierten Geräts (5) mit dem physikalischen Objekt (2), und/oder
basierend auf expliziten Beziehungen der identifizierten Person (5) und/oder des identifizierten Geräts (5) zu dem physikalischen Objekt (2)
automatisch zu berechnen.

4. Automatisches Zugriffsteuersystem nach einem der vorherigen Ansprüche 2 und 3,
**dadurch gekennzeichnet,**
**dass** die Recheneinrichtung (7) als Server ausgebildet ist, und der Server mit der Freigabeeinrichtung (4) über ein privates und/oder öffentliches Datennetzwerk gekoppelt ist.

5. Automatisches Zugriffsteuersystem nach einem der vorherigen Ansprüche 2 bis 4,
**dadurch gekennzeichnet,**
**dass** die Freigabeeinrichtung (4) dazu ausgebildet ist, die Distanzmetrik (6) der identifizierten Person (5) und/oder des identifizierten Geräts (5) zu dem physikalischen Objekt (2) über ein Protokoll zur Interprozesskommunikation, insbesondere RPC, und/oder über eine Anwendungsschnittstelle, insbesondere eine REST Anwendungsschnittstelle und/oder eine SOAP Anwendungsschnittstelle von der Recheneinrichtung (7) abzurufen.

6. Automatisches Zugriffsteuersystem nach einem der vorherigen Ansprüche 1 bis 5,
**dadurch gekennzeichnet,**
**dass** die Identifikationseinrichtung (3) als eine optische Identifikationseinrichtung (3) und/oder eine kontaktbehaftete elektronische Identifikationseinrichtung (3) und/oder eine kontaktlose elektronische Identifikationseinrichtung (3) und/oder eine biometrische Identifikationseinrichtung (3) ausgebildet ist.

7. Automatisches Zugriffsteuersystem nach einem der vorherigen Ansprüche 1 bis 6,
**dadurch gekennzeichnet,**
**dass** das physikalische Objekt (2) als ein WLAN-Router ausgebildet ist, und die Freigabeeinrichtung (4) dazu ausgebildet ist, einem identifizierten WLAN-Gerät (5) Zugriff auf den WLAN-Router zu gewähren.

8. Automatisches Zugriffsteuersystem nach einem der vorherigen Ansprüche 1 bis 6,
**dadurch gekennzeichnet,**
**dass** das physikalische Objekt (2) ein elektronisches Türschloss aufweist, und die Freigabeeinrichtung (4) dazu ausgebildet ist, einer identifizierten Person (5) Zugriff auf das durch das elektronische Türschloss geschützte physikalische Objekt (2) oder Zugang zu dem durch das elektronische Türschloss geschützten physikalischen Objekt (2) zu gewähren.

9. Automatisches Zugriffsteuersystem nach einem der vorherigen Ansprüche 1 bis 6,
**dadurch gekennzeichnet,**
**dass** das physikalische Objekt (2) als eine Sicherheitsschleuse ausgebildet ist, und die Freigabeeinrichtung (4) dazu ausgebildet ist, einer identifizierten Person (5) Zugang zu mindestens einem durch die Sicherheitsschleuse geschützten Bereich zu gewähren.

10. Automatisches Zugriffsteuersystem nach einem der vorherigen Ansprüche 1 bis 6,
**dadurch gekennzeichnet,**
**dass** das physikalische Objekt (2) als ein Ort mit einer Vielzahl von Bereichen ausgebildet ist, und die Freigabeeinrichtung (4) dazu ausgebildet ist, einer identifizierten Person (5) und/oder einem identifizierten Gerät (5) einen Hinweis auf zumindest einen der Bereiche auszugeben.

11. Verfahren zur Zugriffsteuerung auf ein physikalisches Objekt (2) mit den folgenden Schritten:
Identifizieren (S1) einer Person (5) und/oder eines Geräts (5);
Freigeben (S2) des Zugriffs auf das physikalische Objekt (2) oder des Zugangs zu dem physikalischen Objekt (2) für die identifizierte Person (5) und/oder das identifizierte Gerät (5), wenn eine Distanzmetrik (6) der identifizierten Person (5) und/oder des identifizierten Geräts (5) zu dem physikalischen Objekt (2) kleiner ist, als ein vorgegebener Schwellwert für die Distanzmetrik (6).

12. Verfahren nach Anspruch 11,
**dadurch gekennzeichnet,**
**dass** die Distanzmetrik (6) der identifizierten Person (5) und/oder des identifizierten Geräts (5) zu dem physikalischen Objekt (2) zumindest basierend
auf potentiellen Beziehungen der identifizierten Person (5) und/oder des identifizierten Geräts (5) zu dem physikalischen Objekt (2), welche aus semantischen Maßzahlen, welche sich auf die identifizierte Person (5) und/oder das identifizierte Gerät (5) beziehen, und/oder
auf Interaktionen der identifizierten Person (5) und/oder des identifizierten Geräts (5) mit dem physikalischen Objekt (2), und/oder
basierend auf expliziten Beziehungen der identifizierten Person (5) und/oder des identifizierten Geräts (5) zu dem physikalischen Objekt (2)
berechnet wird.

13. Verfahren nach einem der Ansprüche 11 und 12,
**dadurch gekennzeichnet,**
**dass** die Distanzmetrik (6) der identifizierten Person (5) und/oder des identifizierten Geräts (5) zu dem physikalischen Objekt (2) über ein Protokoll zur Interprozesskommunikation, insbesondere RPC, und/oder über eine Anwendungsschnittstelle, insbesondere eine REST Anwendungsschnittstelle und/oder eine SOAP Anwendungsschnittstelle von einer Recheneinrichtung (7) abgerufen wird.

14. Verfahren nach einem der Ansprüche 11 bis 13,
**dadurch gekennzeichnet,**
**dass** die Person (5) und/oder das Gerät (5) mit einer optischen Identifikationseinrichtung (3) und/oder einer kontaktbehafteten elektronischen Identifikationseinrichtung (3) und/oder einer kontaktlosen elektronischen Identifikationseinrichtung (3) und/oder einer biometrischen Identifikationseinrichtung (3) identifiziert wird.

15. Verfahren nach einem der Ansprüche 11 bis 14,
**dadurch gekennzeichnet,**
**dass** beim Freigeben des Zugriffs oder des Zugangs
einem identifizierten WLAN-Gerät (5) Zugriff auf einen WLAN-Router gewährt wird; und/oder
einer identifizierten Person (5) Zugriff auf das durch ein elektronisches Türschloss geschützte physikalische Objekt (2) oder Zugang zu dem durch das elektronische Türschloss geschützten physikalischen Objekt (2) gewährt wird; und/oder
einer identifizierten Person (5) Zugang zu mindestens einem durch eine Sicherheitsschleuse geschützten Bereich gewährt wird; und/oder
einer identifizierten Person (5) und/oder einem identifizierten Gerät (5) zumindest ein für die identifizierte Person (5) und/oder das identifizierte Gerät (5) relevanter örtlicher Bereich ausgegeben wird.
